# EUROPEAN PATENT SPECIFICATION

(11) **EP 2 646 206 B1**
(45) Date of publication and mention of the grant of the patent: **04.03.2015**
(21) Application number: 10787308.5
(22) Date of filing: 01.12.2010
(51) Int. Cl.: B25J 19/00

(54) **ROBOT MANIPULATOR SYSTEM**
ROBOTER-MANIPULATOR SYSTEM
SYSTEME POUR UN MANIPULATEUR DE ROBOT

(43) Date of publication of application: 09.10.2013
(73) Proprietor: ABB AG, 68309 Mannheim (DE)
(72) Inventor: STAAB, Harald, 63846 Laufach (DE); KOCK, Sönke, 69198 Schriesheim (DE)
(86) International application number: PCT/EP2010/007274
(87) International publication number: WO 2012/072093

(56) References cited:
- WO-A1-2010/022991
- JP-A- 62 292 390
- JP-A- 2007 061 962

## Description

The invention relates to a robot manipulator system, comprising a robot manipulator with a kinematic chain of stiff robot manipulator segments which are linked together by hinged joints, a robot controller for controlling the execution of a robot program and at least one temperature sensor for providing measured temperature values.

It is known, that robots are used for industrial applications, such as manufacturing, welding or palletizing for example. Robots respectively robot manipulators comprise several robot manipulator segments, which are connected with hinged joins to a kinematic chain respectively a robot arm. Such a robot manipulator might be electrically or hydraulically powered for example. At the tip of such a robot arm, which comprises for example five to seven degrees of freedom in movement, typically an end-effector is foreseen, for example a gripper tool or a welding gun or such. A robot controller might be foreseen, which controls the movements of the robot manipulator according to a robot program.

Normally robots are arranged within a protected environment, for example within a factory building, whereas the environment temperature of the robot might be in a range of 15°C to 35°C, dependent on the frame conditions. Robots for welding might be suitable also for higher temperatures of their working environment. Thus, typical robots are designed for a use under certain environmental conditions.

Disadvantageously within the state of the art is that standard robots are not foreseen for the use within a cold environment, for example within a freeze room for food or within cold rooms for environmental testing facilities. Most endangered components of a robot manipulator system concerning an operation in such a low-temperature environment are for example the drive components, such as motors, gears, breaks, rubber sealings, resolvers or bearings respectively electronic components. But also application specific additional devices such as cameras or headlights are temperature critical components.

Patent document WO 2010/022991 A1 is disclosing a robot which is designed to resist salt water in a harsh environment. This is achieved by a robot cover covering the entire arm of the robot. The robot cover may further provide functionality such as heating and/or cooling.

Based on this state of the art it is the objective of the invention to enable standard robots, respectively robot manipulator systems, to operate also in a frostily environment, for example 0° to -20°C and below.

This problem is solved by a robot manipulator system of the aforementioned kind. This is characterized in that at least one heatable cover is attached onto at least one manipulator segment for applying heat energy thereon, whereas the belonging amount of heat energy is controlled by a control unit dependent on measured temperature values of the at least one temperature sensor.

A basic idea of the invention consists in applying heat energy onto the most temperature critical areas of the robot system by one or more heatable covers, so that a minimum operational temperature of the belonging critical components is ensured. Those components are typically related to the robot manipulator respectively the robot arm itself, for example the belonging motors, gears including gear oil or breaks. Dependent on the construction of the robot manipulator, some of those components can be seen as part of a stiff robot manipulator segment, if they are directly mounted thereon, for example a motor drive. A heatable cover has preferably a flat, mat-like shape. It can be assumed, that in those cases an attached heatable cover does not reduce the freedom of movement of the robot manipulator. Since the heatable covers are easily attachable onto those surface areas of a standard robot, which are representing or at least covering a temperature critical component, an easy solution for enabling a robot operating in a frostily environment is provided.

On the other side, there are temperature critical components such as bearings respectively some parts of the hinged joints for example, which are not directly related to one stiff robot manipulator segment, since they are arranged moveable or pivotable in between different manipulator segments. Hence in some cases it might be not possible to attach a heatable cover directly on those parts - respectively an outer surface covering those parts - without reducing the freedom of movement of the robot arm. In those cases the heatable covers have to be attached to one or more of the adjacent stiff robot manipulator segments, so that heat energy applied thereon is transferred to the adjacent temperature critical components, whereas the freedom of movement of the robot manipulator is not negatively reduced. Such a kind of heat transfer is rather efficient, since the belonging parts such as bearings or gear normally are built of metal, which has a good heat conductance characteristic.

Heatable covers might be attached on several outer surface areas of the robot manipulator, preferably in close proximity to the temperature critical components. A control mechanism is foreseen to regulate the amount of heat energy, which is applied by one ore more heatable covers onto one or more robot manipulator segments, dependent on a measured temperature. It is either thinkable, to use the measured temperature of one or more robot manipulator segments as a controlled process variable, so that this measured temperature is regulated to a certain value. It is on the other side also possible to apply a predetermined amount of heat energy dependent on a measured ambient temperature. Of course it is thinkable to have different mechanism or regulation characteristics for different heatable covers. According to the invention the amount of heat energy to be applied is controlled respectively determined by a control unit. This could be in the easiest case an electrical circuit, but also for example a separate computing device. Furthermore it is foreseen, that heatable covers are not only active in the case that a movement program is executed. Moreover the heatable covers are also - at least temporarily - active when the robot is a stand-by or wait mode.

According to a preferred embodiment of the invention it is foreseen to integrate this control or regulation functionality within the robot controller, which is basically foreseen to execute a robot program by controlling and coordinating the movement of the robot manipulator dependent on the belonging robot program. The task of controlling, regulating respectively determining heat energy which is applied by the heatable covers dependent on a measured temperature is an add-on functionality which can be implemented in an advantageous manner without additional hardware into the anyhow existing robot controller. A robot controller comprises a computing device and power amplifiers for the drives of the different robot manipulator segments, whereas the power amplifiers might be seen as part of the robot controller or not. In a comparable way power amplifiers or such have to be foreseen for driving the heat generation within the heatable covers according to the demand of the robot controller.

The robot controller is usually connected to the robot manipulator with a control cable of a length of several meters, whereas a length of several ten meters is also possible. Since the robot controller is a temperature critical electronic component, it should be placed in a protected environment with a less critical temperature in a certain distance to the robot manipulator, for example in a control room. A typical maximum distance within a freeze room or such might amount some ten meters, so that the length of a belonging control cable is adaptable thereto.

In a further embodiment of the invention an additional device is mounted on the robot manipulator whereas an additional heatable cover is attached thereon. Such an additional device is specific to the working task of the robot manipulator system and might be a camera, a headlight, a gripper or such. The control of the heat energy, which is applied by the additional heatable cover, is integrated into the robot controller. Hence also additional temperature critical devices respectively components, which are not part of the robot manipulator itself, are easily enabled for operation in a frostily environment.

In a preferred form of the robot manipulator system at least one heatable cover comprises an electrical heater, for example a heat wire. The amount of heat energy applied by an electrical heater is easily to regulate by electrical amplifiers whereas electrical cables are guidable along the robot manipulator arm without major restrictions of its freedom in movement. Furthermore an electrical heater does not cause an exhaust emission within the working environment of the robot manipulator.

According to a further embodiment of the invention at least one heatable cover comprises a thermal insulating outer layer for thermal insulation towards environment. Hence the amount of heat energy to be applied by the heatable cover is reduced since less heat energy disappears unutilized to the environment.

In another variant of the invention that at least one heatable cover comprises a thermal conducting inner layer for heat energy distribution towards the manipulator segments. This is useful especially for those robot manipulator segments, which are not as heat conductive, for example those which are built from a compound material. Thus the heat energy is applied in a homogenous way.

Following a further embodiment of the invention at least one heatable cover is glued onto an outer surface area of a belonging manipulator segment. Thus the intermediate space in between heatable cover and surface of robot manipulator segment is reduced in an advantageous way so that the flow of heat energy is increased. Furthermore a heatable cover is easily and durable attached to a robot manipulator segment.

According to another variant at least one heatable cover is lashed or strapped onto an outer surface area of a belonging manipulator segment with a belt-like device. This enables on one side an increased heat energy flow into the robot manipulator segment due to a minimized intermediate space. On the other side this kind of attached heatable cover is easily to disassemble, provides increased flexibility and better possibility for maintenance. The same advantages are also gained by using a heatable cover, which is designed as solvable pressure collar.

According to a preferred variant of the invention heatable covers are attached on at least two adjacent manipulator segments which are linked together by a common hinged joint. A heatable cover is in some cases not directly attachable on a hinged joint, since it would reduce the freedom of movement of the robot arm in a broader way. This enables an increased indirect heat transfer into the area around the hinged joint.

In a further embodiment a flexible tube is foreseen in between the heatable covers attached on the adjacent manipulator segments which surrounds the common hinged joint and at least a part of the heatable covers. Such a tube has the effect to thermal insulate the area around the hinged joint, so that less indirect transferred heat energy disappears to the environment. Such a flexible tube might partly be comparable with tights, in particular concerning the material. But of course also other materials are thinkable such as an elastic rubber material.

In a preferred form of the invention the robot manipulator system a heatable cover is attached as flexible tube around a hinged joint, whereas the heatable cover comprises a wire-like heating element that is arranged in form of a helix or meander mainly crosswise to the longitudinal extension of the hinged joint. This kind of flexible tube is different to the aforementioned kind, since a more or less fixed cross section respectively circumference is required due to the wire-like heating element, that's sectional length is nearly constant. Since the heating wire is preferably arranged helix- or meander-like crosswise to the longitudinal extension of the hinged joint, the heatable cover is bendable along the longitudinal extension of the hinged joint. So as well the heat dissipation around a hinged joint is reduced in an advantageous way, as it is possible, to apply actively heat energy into this area.

In a preferred form of the invention an attached heatable cover comprises a sensor on its outer side for measuring ambient temperature and/or a sensor on its inner side for measuring the temperature of a covered area of the belonging manipulator segment respectively of the additional device, where it might be attached on. The integration of temperature sensors into a heatable cover provides an easier overall handling of the robot system since a separate mounting of temperature sensors is avoided therewith. Of course an inner sensor has to be thermally insulated against the environment and an outer sensor has to be thermally insulated against the robot manipulator segment where the heatable cover is mounted on. The data connection in between sensor and robot controller might comprise a wireless section. This simplifies once again an arrangement of a sensor.

According to a further variant of the robot manipulator system the amount of heat energy to be applied by the at least one heatable cover depends as well on the measured values of the ambient temperature as of the measured values of the temperature of at least one manipulator segment. Thus it is possible to have a stronger feedback of a measured temperature within a control loop at lower ambient temperatures than at not as low ambient temperatures. The higher dissipation of heat energy into the environment at lower ambient temperatures might be compensated therewith.

In a variant of the invention several heatable covers are attached onto the robot manipulator. Those comprise belonging temperature sensors on their inner side, which are foreseen to provide values of measured temperatures to an evaluation device. This device is foreseen to determine the lowest measured temperature therefrom, whereas the determined value of the lowest temperature is foreseen to be provided to the robot controller. This worst case observation increases the reliability of the temperature control, since always the most disadvantageous temperature value is the base for applying heat energy by the heatable covers. Such a lowest-value-determination might be integrated into the robot controller, but it is also possible to do this in a separate device.

In another embodiment of the invention the robot controller is foreseen to reduce a movement speed as planned while executing a robot program in case that the measured temperature values of the at least one temperature sensor are lower than a predetermined limit. The gear of a robot manipulator segment for example is sometimes arranged within a box filled with gear oil, whereas oil is a temperature critical substance. Intermediate temperatures range of the oil in between an absolute uncritical upper temperature and an absolute critical lower temperature is rather broad, for example in between 10°C and -10°C. By reducing the movement speed of the robot manipulator while executing the robot program, the material stress for the gear is also reduced, so that an operation with reduced speed is enabled at a lower temperature within this intermediate temperatures range. A typical robot program normally comprises different sections of a predetermined movement path with different given movement speeds. A speed reduction could either be realized by a down-scaling of each movement speed by a certain factor or a by a kind of speed limiter. Both functionalities are implementable within the robot controller itself. While executing the robot movement at a reduced speed the gear oil will be heated by friction, so that after applying certain friction energy the oil temperature will rise to an uncritical value.

The same effect is gained according to another variant of the invention, whereas the robot controller is foreseen to execute at least temporarily a steady motion robot program if no further robot program is foreseen for execution. Preferably this steady motion program determines a robot motion, which loads all gears respectively all drives of all robot manipulator segments in a homogenous manner. So additional friction heat is applied homogenously and a cooling down of a robot manipulator respectively the belonging gear components within an off-duty state is avoided in an advantageous way.

Further advantageous embodiments of the invention are mentioned in the dependent claims.

The invention will now be further explained by means of an exemplary embodiment and with reference to the accompanying drawings, in which:
- Fig. 1: shows an exemplary robot manipulator system,
- Fig. 2: shows a second robot manipulator with additional devices,
- Fig. 3: shows adjacent manipulator segments with heatable covers and flexible tube,
- Fig. 4: shows a sixth heatable cover with electrical heat wire and
- Fig. 5: shows a seventh heatable cover arranged as flexible tube.

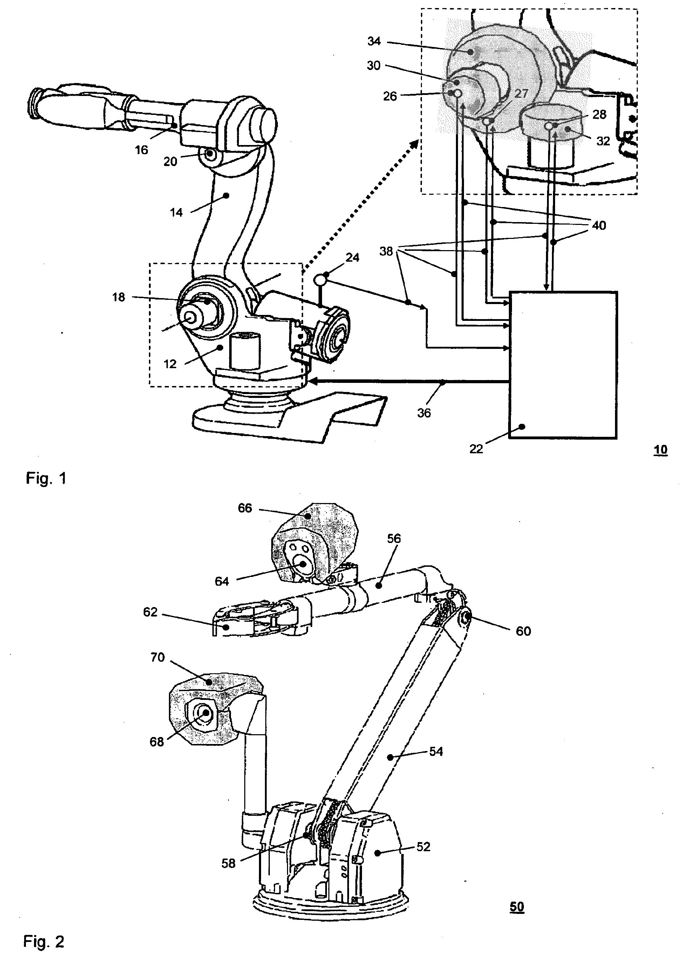

Fig. 1 shows an exemplary robot manipulator system 10. A robot manipulator comprises a kinematic chain of several stiff robot manipulator segments 12, 14, 16, which are linked together by hinged joints 18, 20. The robot manipulator comprises further stiff robot manipulator segments and further hinged joints without reference number, whereas a total of five degrees of freedom in movement of the robot manipulator can be assumed. A robot controller 22 is connected to the robot manipulator by a connection cable 36. The robot controller comprises a not specified computing device and some electrical amplifiers, which drive belonging electrical motors for each stiff robot manipulator segment. A robot program is stored on within a memory of the robot controller, whereas the robot controller determines each required revolution of each electrical motor, so that in the end the tip of the robot manipulator performs the desired movement according to the robot program.

An ambient temperature sensor 24 is mounted on a chassis of a spring cylinder for damping a pivoting movement. The sensor 24 is connected to the robot controller 22 by a data connection line 38. Based on a measured temperature value the robot controller 22 determines an amount of heat energy to be applied on heatable covers 30, 32, 34, which are shown in a detail drawing. Of course it is foreseen, that the heatable covers 30, 32, 34 are not only active in the case that a movement program is executed. Moreover the heatable covers are also active when the robot is a stand-by or wait mode.

The heatable cover 30 is attached to the outer surface of the chassis of an electrical motor drive for pivoting a part of the robot arm, whereas the heatable cover 32 is attached to the outer surface of the chassis of an electrical motor drive for rotating the robot arm around its base. The heatable cover 34 is attached to the outer surface of a gearbox which is partly filled with gear oil. All heatable covers 30, 32, 34 comprise on their inner side - face to the belonging surface area of the robot manipulator-temperature sensors 26, 27, 28 for measuring the temperature of the robot manipulator segments they are attached on. A data connection 38 each is foreseen to provide measured temperature values to the robot controller 22. Of course it is thinkable to use a common data connection and/or to use an - at least in part - wireless data connection. The heatable covers 30, 32, 34 comprise a heat wire each as heater which is driven by the robot controller 22 over the connection lines 40, in this case an electrical cable. Therefore the robot controller comprises amplifiers for driving the heaters.

Fig. 2 shows a second robot manipulator with additional devices in a drawing 50, whereas a belonging robot controller is not shown. The robot manipulator comprises a kinematic chain of stiff robot manipulator segments 52, 54, 56 which are connected with hinged joints 58, 60. A gripper tool 62 is attached to the tip of the robot manipulator, which is turnable around an axis of rotation. Furthermore the kinematic chain mentioned before is turnable around the robot base. In total five degrees of freedom in movement are provided for the movement of the gripper 62. A first additional device 64, a camera, is attached to the stiff robot manipulator segment 56, the upper robot arm. Thus the camera 64 has a good position to observe the working area of the gripper 62 in each position of the robot manipulator. This is important for example to check, if a workpiece has been gripped correctly. A second additional device 68, a headlight, is attached to the stiff robot manipulator segment 52. Thus the working range of the robot manipulator can be illuminated in that way, that sufficient light for the camera 64 is provided. To enable the functionality of the camera 64 and the headlight 68 also under frostily environmental frame conditions, belonging heatable covers 66, 70 are attached onto the belonging additional devices 64, 68. Those additional heatable covers 66, 70 are also controlled by the not shown robot controller.

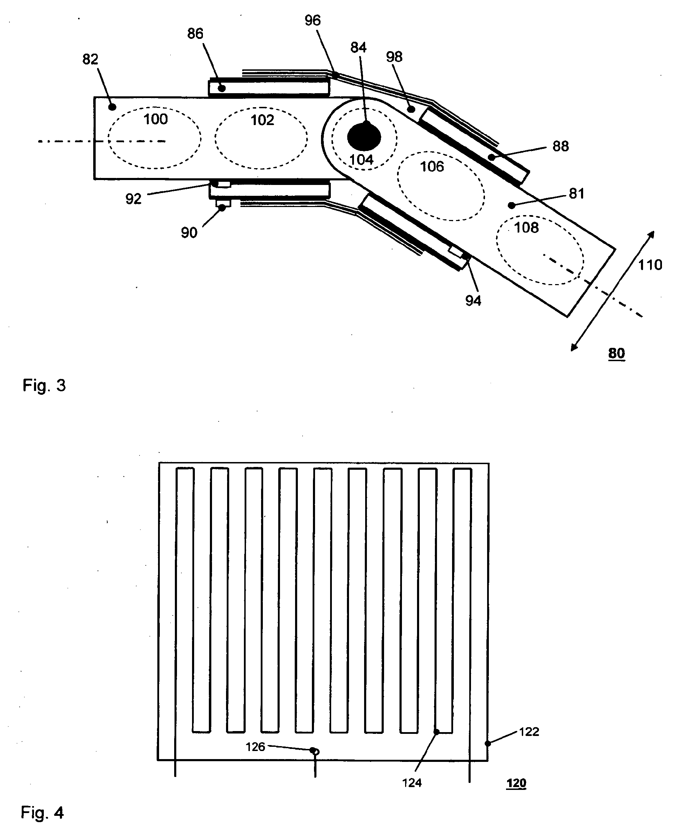

Fig. 3 shows a schematic detail drawing 80 of adjacent manipulator segments 81, 82 with attached heatable covers 86, 88 and a surrounding flexible tube 96. A common hinged joint 84 pivotably connects both manipulator segments 81, 82. Even the hinged joint 84 is assumed to be a temperature critical component a heatable cover is not directly connected to the parts of the hinged joint 84, since it would reduce its freedom of movement. Thus heat energy is applicable with the heatable covers 86, 88 onto the adjacent manipulator segments 81, 82, which as such are not temperature critical. Therefore the temperature in the segment areas surrounded by the heatable covers will increase compared to the lower ambient temperature, whereas temperature areas 102 and 106 with a first temperature arise. The heat energy applied thereon dissipates on one side to the outer temperature areas 100 and 108. On the other side the applied heat is conducted by the robot manipulator segments themselves to the area around the hinged joint 84, where a temperature area 104 with a second temperature arises. Due to dissipation of heat energy from this area 104 to the environment, the second temperature is lower than the first temperature. To reduce the amount of dissipating heat energy, the flexible tube 96 is foreseen. This is for example made of a stretchable material which avoids air exchange in between a surrounded intermediate space 98 and the environment. According to an embodiment of the invention it is foreseen, to increase the first temperature within the temperature areas 102, 106 in that way, that the temperature area 104 around the hinged joint is sufficient high for an uncritical operation.

The heatable covers 86, 88 comprise three layers, whereas the inner layer is built of a heat conductible material. In this example this feature is not essentially required, since the robot manipulator segments 81, 82 are assumed to be built from a metal, which as such is a good head conductor. A medium layer - in the drawing in white colour - is foreseen as thermal insulation against the environment, which reduces a belong heat dissipation. Such a layer could be made from a solid foam material for example. A third outer layer - for example a kind of foil - is foreseen as mechanical protection against mechanical impacts from outside. A not shown heat wire for applying heat energy within the heatable cover is assumed to be arranged in between the inner and the medium layer. Thus the heat energy from the heat wires is easily applicable onto the robot manipulator segments 81, 82, whereas a thermal insulation against the environment is provided. Sensors 92, 94 for measuring the temperature of the belonging robot manipulator segments are as well integrated into the heatable covers 86, 88 as a sensor 90 for measuring the ambient temperature is integrated on the outer side of the heatable cover 86. Those sensors are foreseen to be connected to a related robot controller.

Fig. 4 shows a sixth heatable cover 122 with electrical heat wire 124 in a drawing 120. The heatable cover 122 comprises two not shown flat layers, an inner one which is in a good way heat conductable and a second one which is thermally insulating, whereas the heat wire 124 is arranged in between them. To apply heat energy homogenously within the heated cover, the heat wire 124 is arranged meander-like. A temperature sensor 126 is integrated in the heatable cover 122.

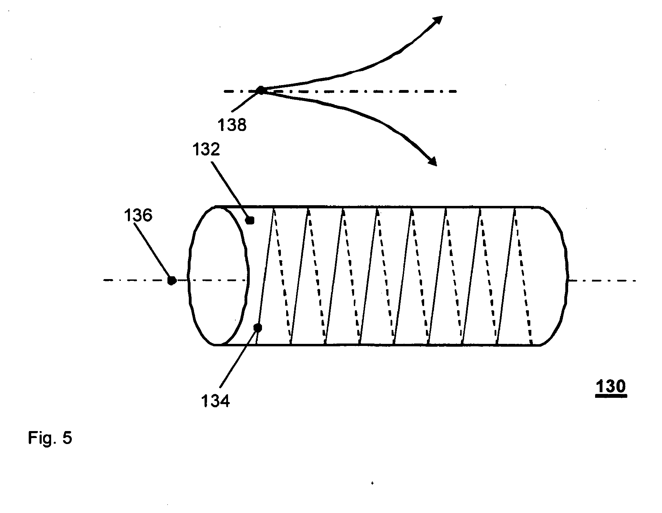

Fig. 5 shows a seventh heatable cover arranged as flexible tube 132 around an axis of rotation 136. An integrated heat wire 134 surrounds the axis of rotation in a helix-like form. A not shown hinged joint with a longitudinal extension along the axis of rotation 136 is assumed to be surrounded by the flexible tube 132. Due to the helix-like arrangement of the heat wire 134 the flexible tube is bendable in the direction of pivoting of the hinged joint, as indicated in the sketch with reference number 138.

### List of reference signs

- 10: exemplary robot manipulator system
- 12: first stiff manipulator segment of first manipulator
- 14: second stiff manipulator segment of first manipulator
- 16: third stiff manipulator segment of first manipulator
- 18: first hinged joint of first manipulator
- 20: second hinged joint of first manipulator
- 22: robot controller
- 24: ambient temperature sensor
- 26: temperature sensor of first heatable cover
- 27: temperature sensor of third heatable cover
- 28: temperature sensor of second heatable cover
- 30: first heatable cover
- 32: second heatable cover
- 34: third heatable cover
- 36: connection for controlling the manipulator
- 38: data connection for measured values from temperature sensors
- 40: connection for heaters
- 50: second robot manipulator with additional devices
- 52: first stiff manipulator segment of second manipulator
- 54: second stiff manipulator segment of second manipulator
- 56: third stiff manipulator segment of second manipulator
- 58: first hinged joint of second manipulator
- 60: second hinged joint of second manipulator
- 62: gripper
- 64: first additional device
- 66: heatable cover attached to first additional device
- 68: second additional device
- 70: heatable cover attached to second additional device
- 80: adjacent manipulator segments with heatable covers and flexible tube
- 81: first adjacent manipulator segment
- 82: second adjacent manipulator segment
- 84: common hinged joint
- 86: forth heatable cover attached to first adjacent manipulator segment
- 88: fifth heatable cover attached to second adjacent manipulator segment
- 90: temperature sensor on outer side of forth heatable cover
- 92: temperature sensor on inner side of forth heatable cover
- 94: temperature sensor on inner side of fifth heatable cover
- 96: flexible tube
- 98: intermediate space surrounded by flexible tube
- 100: first temperature area
- 102: second temperature area
- 104: third temperature area
- 106: forth temperature area
- 108: fifth temperature area
- 110: direction of pivoting
- 120: sixth heatable cover with electrical heat wire
- 122: cover
- 124: heat wire arranged in form of a meander
- 126: temperature sensor of sixth heatable cover
- 130: seventh heatable cover arranged as flexible tube
- 132: cover
- 134: heat wire arranged in form of a helix
- 136: axis of rotation
- 138: bending directions of the tube

## Claims

1. Robot manipulator system (10), comprising
• a robot manipulator with a kinematic chain of stiff robot manipulator segments (12, 14, 16, 52, 54, 56, 81, 82), which are linked together by hinged joints (18, 20, 58, 60, 84),
• a robot controller (22) for controlling the execution of a robot program,
• at least one temperature sensor (24, 26, 28, 90, 92, 94, 126) for providing measured temperature values,
**characterized in that**
at least *two* heatable covers (30, 32, 34, 66, 70, 86, 88, 120, 130) *are* attached onto *the surface of* at least one manipulator segment (12, 14, 16, 52, 54, 56, 81, 82) *representing or at least covering temperature critical areas of the robot* for applying heat energy thereon, whereas the belonging amount of heat energy is controlled by a control unit dependent on measured temperature values (38) of the at least one temperature sensor (24, 26, 28, 90, 92, 94, 126), *wherein different regulation characteristics are foreseen for the at least two heatable covers (30, 32, 34, 66, 70, 86, 88, 120, 130*).

2. Robot manipulator system according to claim 1, **characterized in that** the control unit is the robot controller (22).

3. Robot manipulator system according to claim 1 or 2, **characterized in that** an additional device (64, 68) is mounted on the robot manipulator and that an additional heatable cover (66, 70) is attached thereon (64, 68).

4. Robot manipulator system according to any of the previous claims, **characterized in that** at least one heatable cover (30, 32, 34, 66, 70, 86, 88, 120, 130) comprises an electrical heater (124, 134).

5. Robot manipulator system according to any of the previous claims, **characterized in that** at least one heatable cover (30, 32, 34, 66, 70, 86, 88, 120, 130) comprises a thermal insulating outer layer for thermal insulation towards environment.

6. Robot manipulator system according to any of the previous claims, **characterized in that** at least one heatable cover (30, 32, 34, 66, 70, 86, 88, 120, 130) comprises a thermal conducting inner layer for heat energy distribution towards the manipulator segments.

7. Robot manipulator system according to any of the previous claims, **characterized in that** at least one heatable cover (30, 32, 34, 66, 70, 86, 88, 120, 130) is glued onto an outer surface area of a belonging manipulator segment (12, 14, 16, 52, 54, 56, 81, 82).

8. Robot manipulator system according to any of the previous claims, **characterized in that** at least one heatable cover (30, 32, 34, 66, 70, 86, 88, 120, 130) is lashed or strapped onto an outer surface area of a belonging manipulator segment (12, 14, 16, 52, 54, 56, 81, 82) with a belt-like device.

9. Robot manipulator system according to any of the previous claims, **characterized in that** at least one heatable cover (30, 32, 34, 66, 70, 86, 88, 120, 130) is designed as solvable pressure collar.

10. Robot manipulator system according to any of the previous claims, **characterized in that** heatable covers (30, 32, 34, 66, 70, 86, 88, 120, 130) are attached on at least two adjacent manipulator segments (81, 82) which are linked together by a common hinged joint (84).

11. Robot manipulator system according to claim 10, **characterized in that** a flexible tube (96) is foreseen in between the heatable covers (86, 88) attached on the adjacent manipulator segments (81, 82), which surrounds the common hinged joint (84) and at least a part of the heatable covers (86, 88).

12. Robot manipulator system according to any of the previous claims, **characterized in that** a heatable cover (30, 32, 34, 66, 70, 86, 88, 120, 130) is attached as flexible tube (130) around a hinged joint (18, 20, 58, 60, 84), whereas the heatable cover (30, 32, 34, 66, 70, 86, 88, 120, 130) comprises a wire-like heating element (124, 134) that is arranged in form of a helix (134) or meander (124) mainly crosswise to the longitudinal extension (136) of the hinged joint.

13. Robot manipulator system according to any of the previous claims, **characterized in that** an attached heatable cover (30, 32, 34, 66, 70, 86, 88, 120, 130) comprises a sensor (90) on its outer side for measuring ambient temperature and/or a sensor (92, 94) on its inner side for measuring the temperature of a covered area of the belonging manipulator segment (12, 14, 16, 52, 54, 56, 81, 82) respectively of the additional device (64, 68).

14. Robot manipulator system according to claim 13, **characterized in that** the amount of heat to be applied by the at least one heatable cover (30, 32, 34, 66, 70, 86, 88, 120, 130) depends as well on the measured values of the ambient temperature as of the measured values of the temperature of at least one manipulator segment (12, 14, 16, 52, 54, 56, 81, 82).

15. Robot manipulator system according to claim 13 or 14, **characterized in that** several heatable covers (30, 32, 34, 66, 70, 86, 88, 120, 130) are attached onto the robot manipulator, which comprise belonging temperature sensors (92, 94) on their inner side, which are foreseen to provide (38) values of measured temperatures to an evaluation device, which is foreseen to determine the lowest measured temperature therefrom, whereas the determined value of the lowest temperature is foreseen to be provided to the robot controller (22).

16. Robot manipulator system according to any of the previous claims, **characterized in that** the robot controller (22) is foreseen to reduce a movement speed as planned while executing a robot program in case that the measured temperature values of the at least one temperature sensor (24, 26, 28, 90, 92, 94, 126) are lower than a predetermined limit.

17. Robot manipulator system according to any of the previous claims, **characterized in that** the robot controller (22) is foreseen to execute a steady motion robot program if no further robot program is foreseen for execution.

## Patentansprüche

1. Robotermanipulatorsystem (10), aufweisend:
• einen Robotermanipulator mit einer kinematischen Kette aus steifen Robotermanipulatorsegmenten (12, 14, 16, 52, 54, 56, 81, 82), die mithilfe von Scharniergelenken (18, 20, 58, 60, 84) miteinander verbunden sind,
• eine Robotersteuerung (22) zum Steuern der Ausführung eines Roboterprogramms,
• mindestens einen Temperatursensor (24, 26, 28, 90, 92, 94, 126) zum Bereitstellen von gemessenen Temperaturwerten,
**dadurch gekennzeichnet, dass**
mindestens zwei beheizbare Abdeckungen (30, 32, 34, 66, 70, 86, 88, 120, 130) auf der Fläche von mindestens einem Manipulatorsegment (12, 14, 16, 52, 54, 56, 81, 82) angebracht sind, die temperaturkritische Bereiche des Roboters repräsentieren oder zumindest abdecken, um sie mit Wärmeenergie zu beaufschlagen, während der zugehörige Betrag von Wärmeenergie durch eine Steuereinheit in Abhängigkeit von gemessenen Temperaturwerten (38) des mindestens einen Temperatursensors (24, 26, 28, 90, 92, 94, 126) gesteuert wird, wobei verschiedene Regelcharakteristiken für die mindestens zwei beheizbaren Abdeckungen (30, 32, 34, 66, 70, 86, 88, 120, 130) vorgesehen sind.

2. Robotermanipulatorsystem nach Anspruch 1, **dadurch gekennzeichnet, dass** die Steuereinheit die Robotersteuerung (22) ist.

3. Robotermanipulatorsystem nach Anspruch 1 oder 2, **dadurch gekennzeichnet, dass** eine zusätzliche Vorrichtung (64, 68) an dem Robotermanipulator befestigt ist und dass eine zusätzliche beheizbare Abdeckung (66, 70) daran (64, 68) angebracht ist.

4. Robotermanipulatorsystem nach einem der vorhergehenden Ansprüche, **dadurch gekennzeichnet, dass** mindestens eine beheizbare Abdeckung (30, 32, 34, 66, 70, 86, 88, 120, 130) eine Elektroheizung (124, 134) aufweist.

5. Robotermanipulatorsystem nach einem der vorhergehenden Ansprüche, **dadurch gekennzeichnet, dass** mindestens eine beheizbare Abdeckung (30, 32, 34, 66, 70, 86, 88, 120, 130) eine thermisch isolierende Außenschicht für eine thermische Isolierung gegen die Umgebung aufweist.

6. Robotermanipulatorsystem nach einem der vorhergehenden Ansprüche, **dadurch gekennzeichnet, dass** mindestens eine beheizbare Abdeckung (30, 32, 34, 66, 70, 86, 88, 120, 130) eine thermisch leitende Innenschicht für eine Wärmeenergieverteilung zu den Manipulatorsegmenten hin aufweist.

7. Robotermanipulatorsystem nach einem der vorhergehenden Ansprüche, **dadurch gekennzeichnet, dass** mindestens eine beheizbare Abdeckung (30, 32, 34, 66, 70, 86, 88, 120, 130) auf einen Außenflächenbereich eines zugehörigen Manipulatorsegments (12, 14, 16, 52, 54, 56, 81, 82) geklebt ist.

8. Robotermanipulatorsystem nach einem der vorhergehenden Ansprüche, **dadurch gekennzeichnet, dass** mindestens eine beheizbare Abdeckung (30, 32, 34, 66, 70, 86, 88, 120, 130) an einen Außenflächenbereich eines zugehörigen Manipulatorsegments (12, 14, 16, 52, 54, 56, 81, 82) mithilfe einer gürtelartigen Vorrichtung angelascht oder angebunden ist.

9. Robotermanipulatorsystem nach einem der vorhergehenden Ansprüche, **dadurch gekennzeichnet, dass** mindestens eine beheizbare Abdeckung (30, 32, 34, 66, 70, 86, 88, 120, 130) als lösbare Druckmanschette ausgelegt ist.

10. Robotermanipulatorsystem nach einem der vorhergehenden Ansprüche, **dadurch gekennzeichnet, dass** beheizbare Abdeckungen (30, 32, 34, 66, 70, 86, 88, 120, 130) an mindestens zwei angrenzenden Manipulatorsegmenten (81, 82), die mithilfe eines gemeinsamen Scharniergelenks (84) miteinander verbunden sind, angebracht sind.

11. Robotermanipulatorsystem nach Anspruch 10, **dadurch gekennzeichnet, dass** eine biegsame Röhre (96) zwischen den beheizbaren Abdeckungen (86, 88), die an den angrenzenden Manipulatorsegmenten (81, 82) angebracht sind, vorgesehen ist, die das gemeinsame Scharniergelenk (84) und mindestens einen Abschnitt der beheizbaren Abdeckungen (86, 88) umgibt.

12. Robotermanipulatorsystem nach einem der vorhergehenden Ansprüche, **dadurch gekennzeichnet, dass** eine beheizbare Abdeckung (30, 32, 34, 66, 70, 86, 88, 120, 130) als biegsame Röhre (130) um ein Scharniergelenk (18, 20, 58, 60, 84) angebracht ist, während die beheizbare Abdeckung (30, 32, 34, 66, 70, 86, 88, 120, 130) ein drahtartiges Heizelement (124, 134) aufweist, das in Form einer Spirale (134) oder einer Windung (124) im Wesentlichen quer zu der Längserstreckung (136) des Scharniergelenks angeordnet ist.

13. Robotermanipulatorsystem nach einem der vorhergehenden Ansprüche, **dadurch gekennzeichnet, dass** eine angebrachte beheizbare Abdeckung (30, 32, 34, 66, 70, 86, 88, 120, 130) einen Sensor (90) auf ihrer Außenseite zum Messen von Umgebungstemperatur und/oder einen Sensor (92, 94) auf ihrer Innenseite zum Messen der Temperatur eines abgedeckten Bereichs des jeweils zugehörigen Manipulatorsegments (12, 14, 16, 52, 54, 56, 81, 82) der zusätzlichen Vorrichtung (64, 68) aufweist.

14. Robotermanipulatorsystem nach Anspruch 13, **dadurch gekennzeichnet, dass** der Betrag der Wärme, die durch die mindestens eine beheizbare Abdeckung (30, 32, 34, 66, 70, 86, 88, 120, 130) zu beaufschlagen ist, sowohl von den gemessenen Werten der Umgebungstemperatur als auch von den gemessenen Werten der Temperatur von mindestens einem Manipulatorsegment (12, 14, 16, 52, 54, 56, 81, 82) abhängt.

15. Robotermanipulatorsystem nach Anspruch 13 oder 14, **dadurch gekennzeichnet, dass** mehrere beheizbare Abdeckungen (30, 32, 34, 66, 70, 86, 88, 120, 130) an dem Robotermanipulator abgebracht sind, die zugehörige Temperatursensoren (92, 94) auf ihrer Innenseite aufweisen, die vorgesehen sind, um Werte von gemessenen Temperaturen an eine Auswertevorrichtung bereitzustellen (38), die vorgesehen ist, um die niedrigste gemessene Temperatur davon zu bestimmen, während vorgesehen ist, dass der bestimmte Wert der niedrigsten Temperatur an die Robotersteuerung (22) bereitgestellt wird.

16. Robotermanipulatorsystem nach einem der vorhergehenden Ansprüche, **dadurch gekennzeichnet, dass** die Robotersteuerung (22) vorgesehen ist, um während einer Ausführung eines Roboterprogramms eine Bewegungsgeschwindigkeit planmäßig in einem Fall zu reduzieren, in dem die gemessenen Temperaturwerte des mindestens einen Temperatursensors (24, 26, 28, 90, 92, 94, 126) niedriger als eine vorgegebene Grenze sind.

17. Robotermanipulatorsystem nach einem der vorhergehenden Ansprüche, **dadurch gekennzeichnet, dass** die Robotersteuerung (22) vorgesehen ist, um ein Roboterprogramm gleichmäßiger Bewegung auszuführen, wenn kein weiteres Roboterprogramm zum Ausführen vorgesehen ist.

## Revendications

1. Système manipulateur de robot (10) comprenant :
un manipulateur de robot ayant une chaîne cinématique de segments rigides de manipulateur de robot (12, 14, 16, 52, 54, 56, 81, 82), qui sont liés ensemble par des joints articulés (18, 20, 58, 60, 84),
un contrôleur de robot (22) pour contrôler l'exécution d'un programme du robot,
au moins un capteur de température (24, 26, 28, 90, 92, 94, 126) pour délivrer des valeurs de températures mesurées,
**caractérisé en ce que** :
au moins deux caches pouvant être chauffés (30, 32, 34, 66, 70, 86, 88, 120, 130) sont fixés sur la surface d'au moins un segment de manipulateur (12, 14, 16, 52, 54, 56, 81, 82) représentant ou au moins couvrant des zones critiques de température du robot pour appliquer une énergie thermique sur ceux-ci, tandis que la quantité d'énergie thermique contenue est contrôlée par une unité de contrôle en fonction de valeurs de températures mesurées (38) de l'au moins un capteur de température (24, 26, 28, 90, 92, 94, 126), où différentes caractéristiques de régulation sont prévues pour les au moins deux caches pouvant être chauffés.

2. Système manipulateur de robot selon la revendication 1, **caractérisé en ce que** l'unité de contrôle est le contrôleur de robot (22).

3. Système manipulateur de robot selon la revendication 1 ou la revendication 2, **caractérisé en ce qu'**un dispositif supplémentaire (64, 68) est monté sur le manipulateur de robot et **en ce qu'**un cache pouvant être chauffé supplémentaire (66, 70) est fixé sur celui-ci (64, 68).

4. Système manipulateur de robot selon l'une quelconque des revendications précédentes, **caractérisé en ce qu'**au moins un cache pouvant être chauffé (30, 32, 34, 66, 70, 86, 88, 120, 130) comprend un dispositif de chauffage électrique (124, 134).

5. Système manipulateur de robot selon l'une quelconque des revendications précédentes, **caractérisé en ce qu'**au moins un cache pouvant être chauffé (30, 32, 34, 66, 70, 86, 88, 120, 130) comprend une couche externe d'isolation thermique pour une isolation thermique vis-à-vis de l'environnement.

6. Système manipulateur de robot selon l'une quelconque des revendications précédentes, **caractérisé en ce qu'**au moins un cache pouvant être chauffé (30, 32, 34, 66, 70, 86, 88, 120, 130) comprend une couche interne conductrice de chaleur pour une distribution d'énergie thermique vers les segments du manipulateur.

7. Système manipulateur de robot selon l'une quelconque des revendications précédentes, **caractérisé en ce qu'**au moins un cache pouvant être chauffé (30, 32, 34, 66, 70, 86, 88, 120, 130) est collé sur la zone d'une surface externe d'un segment de manipulateur (12, 14, 16, 52, 54, 56, 81, 82) qui lui appartient.

8. Système manipulateur de robot selon l'une quelconque des revendications précédentes, **caractérisé en ce qu'**au moins un cache pouvant être chauffé (30, 32, 34, 66, 70, 86, 88, 120, 130) est arrimé ou sanglé à une zone de surface externe d'un segment de manipulateur (12, 14, 16, 52, 54, 56, 81, 82) qui lui appartient avec un dispositif de type courroie.

9. Système manipulateur de robot selon l'une quelconque des revendications précédentes, **caractérisé en ce qu'**au moins un cache pouvant être chauffé (30, 32, 34, 66, 70, 86, 88, 120, 130) est conçu sous forme de collier de pression soluble.

10. Système manipulateur de robot selon l'une quelconque des revendications précédentes, **caractérisé en ce que** des caches pouvant être chauffés (30, 32, 34, 66, 70, 86, 88, 120, 130) sont fixés sur au moins deux segments de manipulateur (81, 82) adjacents qui sont liés ensemble par un joint articulé commun (84).

11. Système manipulateur de robot selon la revendication 10, **caractérisé en ce qu'**un tube flexible (96) est prévu entre les caches pouvant être chauffés (86, 88) fixés sur les segments de manipulateur (81, 82) adjacents qui entoure le joint articulé commun (84) et au moins une partie des caches pouvant être chauffés (86, 88).

12. Système manipulateur de robot selon l'une quelconque des revendications précédentes, **caractérisé en ce qu'**un cache pouvant être chauffé (30, 32, 34, 66, 70, 86, 88, 120, 130) est fixé comme tube flexible (130) autour d'un joint articulé (18, 20, 58, 60, 84), tandis que le cache pouvant être chauffé (30, 32, 34, 66, 70, 86, 88, 120, 130) comprend un élément de chauffage filaire (124, 134) qui est conçu sous la forme d'une hélice (134) ou de forme sinueuse (124) principalement de manière transversale à l'extension longitudinale (136) du joint articulé.

13. Système manipulateur de robot selon l'une quelconque des revendications précédentes, **caractérisé en ce qu'**un cache pouvant être chauffé (30, 32, 34, 66, 70, 86, 88, 120, 130) fixé comprend un capteur (90) sur sa face externe pour mesurer une température ambiante et/ou un capteur (92, 94) sur sa face interne pour mesurer la température d'une zone couverte du segment de manipulateur (12, 14, 16, 52, 54, 56, 81, 82) lui appartenant, respectivement, du dispositif supplémentaire (64, 68).

14. Système manipulateur de robot selon la revendication 13, **caractérisé en ce que** la quantité de chaleur à appliquer par l'au moins un cache pouvant être chauffé (30, 32, 34, 66, 70, 86, 88, 120, 130) dépend autant des valeurs mesurées de la température ambiante que des valeurs mesurées de la température d'au moins un segment de manipulateur (12, 14, 16, 52, 54, 56, 81, 82).

15. Système manipulateur de robot selon la revendication 13 ou la revendication 14, **caractérisé en ce que** plusieurs caches pouvant être chauffés (30, 32, 34, 66, 70, 86, 88, 120, 130) sont fixés sur le manipulateur de robot, qui comprennent des capteurs de température lui appartenant (92, 94) sur leur face interne, qui sont prévus pour délivrer (38) des valeurs de températures mesurées à un dispositif d'évaluation, qui est prévu pour déterminer, à partir de celles-ci, la température mesurée la plus basse, tandis que la valeur déterminée de la température la plus basse est prévue pour être délivrée au contrôleur de robot (22).

16. Système manipulateur de robot selon l'une quelconque des revendications précédentes, **caractérisé en ce que** le contrôleur de robot (22) est prévu pour réduire une vitesse de mouvement, comme planifié, tout en exécutant un programme du robot, au cas où les valeurs de températures mesurées de l'au moins un capteur de température (24, 26, 28, 90, 92, 94, 126) soient inférieures à une limite prédéterminée.

17. Système manipulateur de robot selon l'une quelconque des revendications précédentes, **caractérisé en ce que** le contrôleur de robot (22) est prévu pour exécuter un programme de mouvement stable du robot si aucun programme supplémentaire du robot n'a d'exécution de prévue.
